# EUROPEAN PATENT SPECIFICATION

(11) **EP 4 119 242 B1**
(45) Date of publication and mention of the grant of the patent: **15.05.2024**
(21) Application number: 22177311.2
(22) Date of filing: 03.06.2022
(51) Int. Cl.: B65G 47/50, B65G 47/51, B07C 5/36, D06F 93/00, B65G 1/133, B07C 5/34

(54) **AUTOMATED CLOTHES SORTING INSTALLATION COMPRISING AN ASSEMBLY OF A BUFFERING-SORTING CONVEYOR AND A DIVERTING CONVEYOR, METHOD AND STORAGE MEDIUM**
AUTOMATISIERTE SORTIERANLAGE FÜR KLEIDUNGSSTÜCKE, BESTEHEND AUS EINEM PUFFER-SORTIERFÖRDERER UND EINEM UMLENKFÖRDERER, VERFAHREN UND SPEICHERMEDIUM
INSTALLATION DE TRI AUTOMATIQUE DE VÊTEMENTS COMPRENANT UN ENSEMBLE DE TRANSPORTEUR DE TAMPON-TRI ET UN TRANSPORTEUR DE DÉVIATION, PROCÉDÉ ET SUPPORT DE MÉMOIRE

(30) Priority: 12.07.2021 NL 2028700
(43) Date of publication of application: 18.01.2023
(73) Proprietor: Van Remundt Beheer B.V., 2408 AP Alphen Aan Den Rijn (NL)
(72) Inventor: VAN REMUNDT, Nicolaas Hyacinthus Maria, 2408 AP Alphen aan den Rijn (NL)
(74) Representative: EP&C

(56) References cited:
- EP-A2- 2 128 329
- DE-A1- 4 226 066
- US-A- 5 687 850
- US-A- 5 794 534
- US-A- 6 050 421

## Description

### FIELD OF THE INVENTION

The present invention relates to automated clothes sorting installations for sorting-out clothing items hanging on clothes hangers. Such clothes sorting installations are commonly used for sorting out clothes after they have been washed in industrial laundries, but also in chemical laundries, for taking in and giving out company clothes, etc.

### BACKGROUND TO THE INVENTION

Clothes sorting installations are known in a wide variety of embodiments.

For example, NL-9500506 of the present inventor already shows a sorting carousel that comprises an endless track formed by a hollow rail through which a chain is moveable. The hollow rail delimits a downwardly open longitudinal slot. The chain is guided slidably through the hollow rail. Hooks are connected at regular spaced intervals to a lower side of the chain. The hooks project downward from the chain through the slot. Each hook is destined to have one clothes hanger hung to.

Before starting with a loading operation of the carousel, the chain with the empty hooks is rotated until a magnet that is connected to a first one of the hooks, passes a reed switch. A control unit then knows the position of the first hook. The chain is then stopped with this first empty hook in front of a loading station. A first clothes hanger with a clothing item is transported via an inlet sliding bar along a bar code reader to identify the item and then have it slide onto the first hook. The control unit then assigns the identified bar code to the first hook. Subsequently, the chain is moved one step, such that the second empty hook is brought in front of the loading station. Thus all, hooks besides the last twelve can be loaded. The last twelve need to remain empty due to space that is required for loading a new clothing item into the carousel.

After being fully loaded in the stepwise manner, a sorting-out of the clothing items may start, during which the respective clothes hangers are released to an outlet sliding bar at an unloading station in a desired order according to a sorting algorithm that is programmed into the control unit. The carousel then each time switches between a low and high speed. Shortly before the control unit instructs an operable outlet device to transfer a specific clothes hanger from its hook onto the outlet sliding bar, the speed is lowered, and, after the clothes hanger has indeed been sorted-out, is increased again.

Although this system is already quite reliable and user-friendly, it still leaves to be improved. In particular the sorting-out unloading process may take a lot of time. Not only must the speed of the chain each time be decreased and increased, it also requires a large number of full rotations of the chain before all clothing items have been sorted-out in the desired order. The changing chain speeds in combination with the large number of full rotations the chain needs to make, may lead to wear and require frequent maintenance. Another disadvantage is that the sorting-out can only take place according to one criterium at a time. If a sorted-out batch needs be sorted-out further, then this batch needs to be reloaded onto the carousel and sorted-out according to another criterium.

Another example of an automated endless track clothes sorting installation is shown in EP-2.128.329. Here, a carousel comprises an endless track with an upper sliding surface that is configured for clothes hangers to slide over and along with a hook portion. A towing hook conveyor is positioned above and along at least a section of the endless track. This towing hook conveyor comprises a conveyor member to which towing hooks are connected at spaced apart intervals. Each towing hook is configured to drop down due to gravity and grip around a single hook portion of a foremost clothes hanger that lies ready waiting in a row and then tow it along six operable diverters that are each configured to temporarily open a respective part of the endless track above a dedicated one of six outlet sliding rods.

Upstream of the first diverter, a reader is provided for reading out a memory that is present on each clothes hanger and/or each clothing item hanging thereon. Thus each clothing item can be recognized before starting to pass by the diverters. A programmed control unit then can decide if any and if so which one of the diverters needs to be temporarily opened to have that identified clothing item sorted-out onto a specific one of the outlet sliding rods.

Although this installation already has the ability to sort-out according to six different criteria at a same time and thus in six batches, it still has a number of important disadvantages. First of all each clothing item must be identified as shortly as possible before it arrives at the unloading section with its six diverters. Only then, after being read and identified, the control unit can start its sorting algorithm and decide if any and if so which one of the diverters needs to be temporarily opened, and as importantly when and for how long. This substantially limits the maximum handling speed of the carousel of EP-2.128.329 during the sorting-out.

Furthermore, the maximum number of outlet sliding rods is limited by the dimensions of the carousel, in particular the length of one of the opposing straight sections of its endless track. Furthermore, a maximum number of clothing items that can be buffered on this carousel is limited to only a few hundred. In particular, such buffering on the carousel can only be done along those sections of the endless track not forming part of its unloading section where the diverters are provided.

Yet another disadvantage is that the provision of the distinctive towing hook conveyor above only the unloading section of the endless track, makes the installation expensive, and more importantly more vulnerable to malfunctions to occur. In particular the fine-tuning between the reader, the speed of the towing hook conveyor and the correct moment of opening of the diverter, may sometimes leave to be desired. Also it may well occur that the buffering outside the unloading section, may lead to a jamming of the clothes hangers, for example because of hook parts thereof accidentally starting to grip into or over each other.

### BRIEF DESCRIPTION OF THE INVENTION

The present invention aims to overcome those disadvantages at least partly or to provide a usable alternative. In particular the present invention aims to provide an economic and efficient automated clothes sorting installation that only requires a relative limited amount a space, while still being able to quickly sort-out large volumes of clothing items at high speed and according to a plurality of sorting criteria.

According to the present invention this aim is achieved by the automated clothes sorting installation for sorting clothing items hanging on clothes hangers, according to claim 1.

This installation comprises:
- an inlet station configured for feeding clothing items hanging on clothes hangers;
- an identifying device configured for identifying respective ones of the clothes hangers or clothing items hanging on them;
- a diverting conveyor configured for transporting the clothes hangers while diverting them, and for that has:
   - an endless track;
   - an endless conveyor member, that is guided along the track, that is equipped with spaced apart transportation members that are configured to take along respective ones of the clothes hangers; and
   - a drive unit for driving the conveyor member,
- an outlet station with a plurality of accumulators that are placed in parallel of each other alongside the diverting conveyor, and that are each configured to temporarily buffer a number of diverted clothes hangers;
- operable diverters positioned between the diverting conveyor and the accumulators; and
- a control unit that is configured to operate the diverters to divert identified ones of the clothes hangers towards respective ones of the plurality of accumulators each corresponding to an individual sorting criterium.

According to the inventive thought this installation further comprises:
the clothes sorting installation further comprising:
   - one or more buffering-sorting conveyors, each configured for transporting the clothes hangers while temporarily buffering and sorting them, and for that each having:
      - an endless track;
      - an endless conveyor member, that is guided along the track, that is equipped with spaced apart transportation members that are configured to take along respective ones of the clothes hangers; and
      - a drive unit for driving the conveyor member,
         wherein the identifying device is positioned along the inlet station, and the inlet station connects to each buffering sorting conveyor for feeding identified clothes hangers thereto,
         wherein each buffering-sorting conveyor has its spaced apart transportation members define individual inlet hanger positions that are configured to have the identified clothes hangers assigned to,
         wherein the one or more buffering-sorting conveyors are positioned to sort-out onto the diverting conveyor,
         wherein the diverting conveyor has its spaced apart transportation members define individual outlet hanger positions that are configured to have the sorted-out ones of the clothes hangers assigned to, and
         wherein the control unit further is configured to:
            ∘ assign the identified clothes hangers to the individual inlet hanger positions; and
            control each buffering-sorting conveyor to sort-out respective ones of the identified clothes hangers from their assigned individual inlet hanger positions according to an accumulated set of the individual sorting criteria onto the diverting conveyor, while assigning them to the individual outlet hanger positions.

Thus advantageously a reliable and economic clothes sorting installation is obtained that is well able to quickly sort-out high volumes of clothing items at high speed and according to a plurality of criteria, while at a same time only needing a limited amount of surface area and space. The specific combination of one or more distinctive separate buffering-sorting conveyors destined to sort-out to a same dedicated diverting conveyor while being able to make use of one single identification of the clothing items right at the beginning of the clothes sorting installation, has appeared to offer a large number of important advantages.

First of all, it has now become possible to have the buffering-sorting installation, after having been randomly loaded with already fully identified clothing items, immediately sort-out a relative large number of clothing items according to an accumulated set of individual sorting criteria. The order in which they get sorted-out is not yet critical, as long as they belong to at least one of the sorting criteria that for that sorting cycle go. This brings the advantage that the buffering-sorting conveyor can be unloaded with all to be sorted-out clothing items in merely one round. Subsequently, the diverting conveyor is fully able and equipped to divert the sorted-out clothing items, again in merely one go, over the plurality of accumulators since the number thereof can be chosen to be at least the same as or larger than the number of sorting criteria.

Thus it can be guaranteed that only clothing items that at that moment are aimed to-be buffered in distinctive batches on the accumulators, get transferred from the buffering-sorting conveyor onto the diverting conveyor. This means that each and every clothing item that gets transferred onto the diverting conveyor actually gets diverted to one of the accumulators. No clothing items shall pass the last one of the accumulators. This makes it possible to construct the diverting conveyor with minimum widths between opposing back-forth sections thereof of less than a width of the clothing items. Thus, the diverting conveyor can be built truly compact. Also this makes it possible to have the diverting conveyor operate at high speed. An bumping of clothes hangers moving in different directions is not possible.

Secondly, the number of sorting criteria according to which the clothing items can be sorted-out at a same time can now easily be increased by adding additional accumulators alongside the diverting conveyor. It is even possible to quickly and easily increase the length of the diverting conveyor for that. Furthermore, the endless track of the diverting conveyor does not have to follow a racetrack shape, but may even meander across an available space.

Another important advantage comes from the fact that both the buffering-sorting conveyor as well as the diverting conveyor are equipped with assignable strictly defined individual hanger positions, in combination with the fact that the reader is provided directly at the beginning of the sorting installation along the inlet station. A jamming of clothes hangers, for example because of hook parts thereof accidentally starting to grip into or over each other, while being transported along the endless track of the buffering-sorting conveyor or along the track section of the diverting conveyor passed by the accumulators alongside it, advantageously is not possible. The clothing items only need to be identified once at the inlet station. From there the identification of the clothing items can be memorized by the control unit and each time a loading or transfer occurs be assigned to a corresponding one of the hanger positions. Also this makes it possible for a sorting algorithm to already start to calculate most optimum sorting orders, before the clothing items have arrived at the diverting conveyor. This makes it possible to have the entire sorting installation not only operate more quickly but also faultless. The control unit knows from the feeding, the sorting-out, the transfer all the way to the diverting which clothing items are where and at which hanger position inside which one of the respective conveyors of the sorting installation.

Right from the identifying location along the inlet station, the clothing item and clothing information is known and assignable to any position on each of the conveyors. This means that during buffering, the clothing information can be taken along and assigned to a position in the buffering-sorting conveyor. During sorting-out, the clothing information can be taken along and assigned to a position in the diverting conveyor, after which it can be diverted onto the correct accumulator.

The identifying device can easily be made suitable to read barcode or chip or any other desired identifier.

Yet another advantage is that the provision of the distinctive buffering-sorting conveyor and the diverting conveyor makes it possible to construct them differently in a way that best fits their specific dedicated aimed purposes.

In a preferred embodiment at least two buffering-sorting conveyors can be provided, that are placed in parallel between the inlet station and the diverting conveyor, and that are configured to have one of them buffer fed identified clothes hangers coming from the inlet station while another one of them is sorting-out earlier buffered identified clothes hangers onto the diverting conveyor with the diverting conveyor simultaneously diverting sorted-out clothes hangers onto the accumulators.

Thus advantageously, it has now become truly easy to not only increase the buffering capacity but also the sorting speed for the entire sorting installation. For example, the buffering capacity can easily be multiplied by adding additional buffering-sorting conveyors to the sorting installation. Those plurality of buffering-sorting conveyors then can be placed parallel alongside each other. Also for example, the sorting speed can easily be increased by having such a plurality of buffering-sorting conveyors loaded respectively unloaded by the turn. Thus, one buffering-sorting conveyor can be loaded via the inlet station, while simultaneously another buffering-sorting conveyor sorts-out onto the diverting conveyor. The diverting conveyor and outlet station do not have to wait at stand-still during loading of one of the buffering-sorting conveyors, but can keep on diverting sorted-out clothing items coming from another buffering-sorting conveyor. The same goes for the inlet station, that does not have to wait at stand-still during sorting-out of one of the buffering-sorting conveyors, but can keep on feeding identified clothing items onto another buffering-sorting conveyor.

In a preferred further or alternative embodiment each buffering-sorting conveyor can be a variable speed type, whereas the diverting conveyor is a constant speed type.

This advantageously makes it possible to control the operating speed of the buffering-sorting conveyor exactly in accordance with its own specific optimum buffering/sorting conditions, for example with a stop and go stepwise displacement of its conveyor member during loading, and a repetitive decrease/increase of operating speed during sorting-out of each clothing item, without this being able to negatively influence the diverting process. Furthermore, this makes it possible to simultaneously operate the diverting conveyor exactly in accordance with its own specific optimum diverting conditions at said constant speed. Those optimum operating conditions for both different types of conveyors aid in optimizing the efficiency of the entire installation, while also preventing wear and requiring less maintenance for its components.

In a preferred further or alternative embodiment each buffering-sorting conveyor has x defined assignable individual inlet hanger positions, whereas the diverting conveyor has y defined assignable individual outlet hanger positions, wherein x may be larger than y, in particular more than the number of the plurality of accumulators larger.

In a preferred further or alternative embodiment the buffering-sorting conveyor can be of a type that is characterized by the spaced apart transportation members of each buffering-sorting conveyor being formed by hanging elements that are configured to hang respective ones of the clothes hangers with a hook portion onto, wherein the hanging elements define the individual inlet hanger positions.

In addition thereto the endless track of the buffering-sorting conveyor than preferably may be racetrack shaped and comprise pairs of opposing straight and convexly curved track sections, wherein distances between successive points at which the hanging elements are attached to the endless conveyor member are such that there are always at least three hanging elements in a convexly curved track section, wherein the hanging elements comprise bearing arms which are attached to the conveyor member and extend sideways outwards from the conveyor member, outer bearing-arm parts being provided with hook means for the clothes hangers to be hung from, so that, during a movement of the conveyor member along the track, the distances between successive hook means each time case increase in the convexly curved track sections and decrease in the straight track sections.

This type of conveyor is particularly suitable for carefully but quickly buffering large volumes of the fed identified clothing items, while also being able to carefully but quickly sort-out specific ones of those buffered clothing items onto the diverting conveyor.

The loading of the fed identified clothes hangers with clothing items then advantageously can be done in the first convexly curved track section where there is more than enough space for the clothing item to be quickly and easily be hung between the spreading bearing arms onto one of the hook means without being hindered whatsoever by clothing items that might already hang on neighbouring bearing arms. The sorting-out of the identified clothes hangers with clothing items then advantageously also can be done in the second convexly curved track section where there is also more than enough space for the clothing item to be quickly and easily be transferred from between the spreading bearing arms of one of the hook means without being hindered whatsoever by clothing items that might still hang on neighbouring bearing arms.

In a preferred further or alternative embodiment the diverting conveyor can be of a type that is characterized by the track thereof comprising an upper sliding surface that is configured for the clothes hangers to slide along with a hook portion, wherein the upper sliding surface delimits an upwardly open longitudinal slot, wherein the conveyor member is guided slidably along the track underneath the upper sliding surface with the spaced apart transportation members being formed by pushing tabs that project upward from the conveyor member through the slot, and wherein the pushing tabs define the individual outlet hanger positions in between them, and are configured to push the assigned sorted-out ones of the identified clothes hangers along the track while sliding over the upper sliding surface.

This type of conveyor is particularly suitable for individually transporting the sorted-out clothing items at high speed along the diverters.

The diverting of the sorted-out transferred identified clothes hangers with clothing items then advantageously can be done directly along a track section where the accumulators are positioned alongside. The pushing tabs can be spaced such far apart that the transfer of a clothes hanger between two of them is not critical. In fact, a transfer to whatever spacing between whatever set of pushing tabs, already suffices, because as soon as this is detected, the assignment can take place to just that spacing between that set of pushing tabs. Furthermore, with this type of conveyor the weight of the clothes hangers with clothing items gets carried by the fixedly mounted track section and not by the conveyor member. This also aids in increasing the transportation speed of the diverting conveyor.

In a preferred further or alternative embodiment the inlet station may further connect to the diverting conveyor by means of a bypass connection that is configured to directly assign and load selected ones of the identified clothes hangers to the diverting conveyor while bypassing the one or more buffering-sorting conveyors. Thus, the installation has a bypass option added thereto that makes it possible to, if desired, directly move some of the clothing items from the inlet station towards the diverting conveyor without first having to load and buffer them onto the buffering-sorting conveyor(s). This bypass option advantageously can be used each time that a buffering and/or intermediate sorting step is not desired or necessary.

Thus, owing to the provision of the bypass option, the efficiency and flexibility of sorting with the installation can be increased and the required sorting time shortened. Not all identified clothes hangers with clothing items hanging on them, first need to be assigned to the inlet hanger positions as intermediate step, but only a not immediately required part thereof.

In addition thereto the control unit then may further be configured to, if immediately applicable according to the accumulated set of the individual sorting criteria, directly assign and load the identified clothes hangers to the individual outlet hanger positions while having them bypass the one or more buffering-sorting conveyors, or, if not immediately applicable according to the accumulated set of the individual sorting criteria, firstly assign, load and buffer the identified clothes hangers to the individual inlet hanger positions of the one or more buffering-sorting conveyors.

This can be achieved in cooperation with pre-determined sorting algorithms, in particular ones that are based upon order lists of clients. Such a client's order list then can be forwarded to the control unit, which order list has specific amounts of desired clothing items on it, for example specific amounts of available article-size-modifications (arsimo's) for that client, also referred to as type-size combinations. Those ones of clothing items arriving at the inlet station, for example coming out of a laundromat, that are identified as indeed being present on that order list, then advantageously can be directly passed on towards the diverting conveyor, while those ones of clothing items arriving at the inlet station, that are identified as not being present on that order list or as already being in surplus for that order list at that moment, then can be passed on towards the buffering-sorting conveyor(s) for temporary buffering onto empty ones of the inlet hanger positions thereof.

There those not directly required clothing items can be temporarily buffered for future sorting cycles, such that at the start of future sorting cycles, the buffering-sorting conveyor(s) may already partly be loaded with various kinds of sizes and types of clothing items that were passed on to them during previous sorting cycles.

During future sorting cycles, the control unit then advantageously may order the buffering-sorting conveyor(s) to sort out specific sizes and/or types of clothing items that are on the order list onto the diverting conveyor. This can for example be done at the end of a sorting cycle when no more new clothing items arrive at the inlet station, and some specific clothing items are still required for completion of that order list. It can also be done at the beginning of a new sorting cycle in order to first have the buffering-sorting conveyors sort out as much clothing items as possible onto the diverting conveyor. Both the beginning and ending options may be advantageous as well as intermediate sorting outs. This is no problem for the installation since the control unit at each moment in time knows exactly which identified clothing items are buffered in which specific buffering-sorting conveyor and at which specific inlet hanger position thereof.

Further preferred embodiments of the invention are stated in the dependent subclaims.

The invention also relates to a sorting method according to claim 13-14, as well as to a non-volatile storage medium for the control unit thereof according to claim 15.

### DETAILED DESCRIPTION OF THE DRAWINGS

The invention shall now be explained in more detail below by means of describing some exemplary embodiments in a non-limiting way with reference to the accompanying drawings, in which:
- Fig. 1 shows a first embodiment of the sorting installation according to the invention in a schematic top view that is destined for sorting-out and diverting small-size batches of personal clothing items of a large group of non-standardized types of clothing items of persons;
- Fig. 2 shows a same view of a second embodiment that is destined for sorting-out and diverting large-size batches of a limited set of a small group of standardized types of clothing items of personnel of a hospital;
- Fig. 3 shows a third embodiment with an optional bypass connection; and
- Fig. 4 shows a fourth embodiment also with an optional bypass connection.

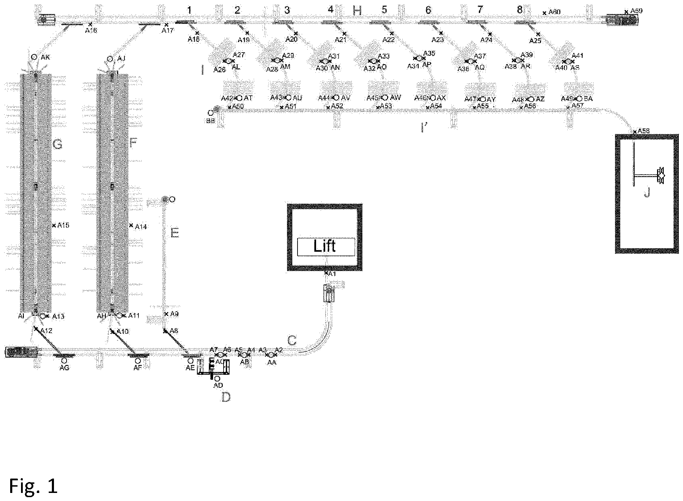

In fig. 1 the sorting installation comprises an inlet station that has been indicated with the reference C. The inlet station C comprises an inlet conveyor that is configured to transport incoming clothes hangers with clothing items hanging upon them, that for example have just been washed in a laundry, towards loading points A8, A10, A12.

The inlet conveyor here is formed by a so-called towing hook conveyor. See for example EP-2.128.329, that discloses an example hereof. Such a towing hook conveyor is characterized by a rail track with an upper sliding surface that is configured for clothes hangers to slide over and along with a hook portion. A towing hook conveyor is positioned above and along the rail track. This towing hook conveyor comprises an endless conveyor member to which towing hooks are connected at spaced apart intervals. Each towing hook is configured to drop down due to gravity and grip around a single hook portion of a foremost clothes hanger that lies ready waiting in a row and then tow it along the rail track.

The endless conveyor member, for example a chain or belt, is guided transportable above the rail track by means of a suitable drive unit, for example a sprocket or pulley that is drivable by an electromotor. This electromotor is controllable by a control unit (not shown) to stop and go.

An identifying device D is positioned alongside the inlet conveyor. The identifying device D is able to identify each clothing hanger by reading out for example a barcode, chip or RFID tag that is present in each clothing item. The read out identification in combination with the specific spacing inside which that clothes hanger is positioned is sent towards the control unit.

Three operable inlet diverters AE, AF, AG are integrated inside the rail track. The inlet diverters AE, AF, AG are operable by the control unit to temporarily open a respective part of the rail track above a dedicated one of three downwardly angled loading sliding rods leading to the loading points A8, A10, A12.

A first one of the loading points A8 connects to a buffer rod E, a second one of the loading points A10 connects to a first buffering-sorting conveyor F, and a third one A12 of the loading points connects to a second buffering-sorting conveyor G. The buffering-sorting conveyors F, G are configured to buffer the loaded identified clothes hangers and sort them out at sorting-out points AK, AJ.

The buffering-sorting conveyors F, G here are formed by spreading-type carousels. See for example EP-1.163.174, which is incorporated by reference here, that discloses an example hereof. Such a spreading-type carousel is characterized by a racetrack shaped endless track with opposing straight track sections that are connected to each other at head ends by means of convexly curved track sections. An endless conveyor member, for example a chain or belt is guided transportable along those track sections by means of a suitable drive unit, for example a sprocket or pulley that forms one of the curved track sections and that is drivable by an electromotor. This electromotor is controllable by the control unit to stop and go during loading and to vary speed during sorting-out.

Sideways projecting bearing arms are attached to the conveyor member. At the free outer ends of the bearing arms, hook means are provided. Each hook means defines an individual inlet hanger position that is assignable by the control unit with the identification of the clothing item that gets loaded on it.

Each carousel F, G here has a relative large number of individual inlet hanger positions for the clothing items, in particular more than 100, more in particular more than 200, for example about 400.

During a movement of the endless conveyor member along the racetrack, the distances between successive hook means each time case increase in the convexly curved track sections and decrease in the straight track sections. This has the advantage that loaded clothing items automatically come to lie close against each other along the straight track sections, which makes large buffering volumes possible, and that the loaded clothing items automatically get spread out away from each other along the curved track sections, which makes loading and sorting-out operations easier.

For that reason, the loading sliding rods towards the loading points A10, A12 end out above the first curved track sections of the buffering-sorting conveyors F, G. For the same reason, two downwardly angled transfer sliding rods start underneath the respective second curved track sections of the buffering-sorting conveyors F, G at the two sorting-out points AJ, AK.

The sorting-out points AJ, AK connect via the transfer sliding rods at transfer points A16, A17 to a same diverting conveyor H, such that sorted-out clothes hangers can be transferred from the buffering-sorting conveyors F, G onto the diverting conveyor H.

The diverting conveyor H here is formed by a so-called domino-track. See for example GB-2.161.442, which is incorporated by reference here, that discloses an example hereof. Such a domino-track is characterized by a hollow rail with an upwardly open longitudinal slot as fixedly installed track section. An endless conveyor member, for example a chain or belt, is guided transportable through the hollow rail by means of a suitable drive unit, for example a sprocket or pulley that is drivable by an electromotor. This electromotor is controllable by the control unit to operate at a constant speed.

On a top side of the endless conveyor member pushing tabs (dominos) are mounted at regularly spaced intervals. The pushing tabs project upward from the conveyor member through the slot. Each spacing in between two pushing tabs defines an individual hanger outlet position. This spacing can be relative small, in particular between 20-40 cm, for example about 30 cm.

The hollow rail has a smooth upper sliding surface along which the incoming clothes hangers are slidable with a hook portion while being pushed forward by the pushing tabs upon the stop and go driving of the endless conveyor member by the drive unit.

The diverter domino-track H here has a relative small number of individual outlet hanger positions for the clothing items, in particular less than 100, more in particular less than 50, for example about 25.

Eight operable outlet diverters 1-8 are integrated inside the hollow rail. The outlet diverters 1-8 are operable by the control unit to temporarily open a respective part of the hollow rail above a dedicated one of eight accumulators of an outlet station I.

The accumulators of the outlet station I are each formed by a downwardly angled buffering sliding rod. The buffering sliding rods here each comprise an upstream and a downstream buffer segment with an operable stopper AL-AS between them.

Each buffer segment here comprises a buffering space for accumulating relative small batches of clothing items, in particular between 1-20, for example about 10-15.

The operable stoppers AL, AM, AN, AO, AP, AQ, AR, AS are operable by the control unit to temporarily give way to the accumulated batches of diverted sorted-out clothes hangers to slide further along their buffering sliding rods towards the downstream segments, where they are stopped by operable stoppers AT, AU, AV, AW, AX, AY, AZ, BA that are also operable by the control unit.

The accumulators connect to a same outlet conveyor I', such that buffered batches of diverted sorted-out clothes hangers can be transferred from the accumulators onto the outlet conveyor I'.

The outlet conveyor I' here also is formed by a so-called domino-track with a hollow rail that has an upwardly open longitudinal slot as fixedly installed track section. An endless conveyor member, again for example a chain or belt, is guided transportable through the hollow rail by means of a suitable drive unit, for example a sprocket or pulley that is drivable by an electromotor. This electromotor is controllable by the control unit to operate at a constant speed.

On a top side of the endless conveyor member pushing tabs (dominos) are mounted at regularly spaced intervals. The pushing tabs project upward from the conveyor member through the slot. The hollow rail has a smooth upper sliding surface along which the buffered batches of diverted sorted-out clothes hangers are slidable with a hook portion. Each spacing in between two pushing tabs defines sufficient space for the entire batch and is assignable by the control unit with the clothing information of the entire batch of clothing items that gets transferred to it. This spacing can be relative large, in particular between 80-120 cm, for example about 100 cm.

A possible method for operating the clothes sorting installation shall now be described as an example.

To be sorted-out freshly washed personal clothing items of groups of persons hanging on clothes hangers arrive in random order at an entrance of the inlet station C, here via a lift. Each clothes hanger gets pulled along by a towing hook of the towing hook conveyor along the track of the inlet station C.

The control unit controls the towing hook conveyor to transport the clothing items passed by the identifying device D to identify each clothing item and load them onto one of the two spreading-type carousels, let's say starting with carousel F. For that, the control unit sets the inlet diverter AF in an open position. If a clothing item cannot be identified by the identifying device, the control unit has it diverted to the buffer rod E, by means of temporarily opening the inlet diverter AE.

The loading of carousel F takes place stepwise according to a stop-and-go principle. Each time, the control unit stops the carousel F with a new empty hook means exactly coming to lie still at the loading point A10. Then the control unit has the inlet towing hook conveyor pull a new identified clothes hanger forward along the track until it drops of at the open inlet diverter AF to slide along its loading sliding rod onto the empty hook means. With this the control unit exactly knows which clothing item has just been identified, diverted and loaded upon which hook means of the carousel F, and assigns it to that hook means. Subsequently, the control unit orders the carousel F to move one step forward such that a subsequent empty hook means exactly gets positioned at the loading point A10 to be loaded and assigned with an identified clothing item. This is repeated over and over again until the carousel F is fully loaded. With fully loaded it is meant that a few hook means, for example between 1-5, remain empty between the first and last loaded ones.

As soon as carousel F has been fully loaded, the control unit closes the inlet diverter AF and opens the inlet diverter AG, such that from then on carousel G gets loaded and assigned with identified clothing items.

The carousel F then may start to sort-out respective ones of the identified clothes hangers from their assigned individual inlet hanger positions of eight persons towards the diverting conveyor H. During this, the diverting domino track of the diverting conveyor H gets driven at constant speed, for example at a constant diverting speed of about 1500 hanger positions per hour, whereas the sorting-out of the carousel F takes place according to a varying speed principle, for example at an average sorting-out speed (incl. decelerations and accelerations) of about 1000 hanger positions per hour. If the clothing items that need to be sorted-out are hanging relative close together, then the carousel needs to decrease its average speed, if the clothing items that need to be sorted-out are hanging relative far away from each other, then the carousel may increase its average speed.

The carousel F first starts to transport all buffered assigned identified clothing items along the racetrack at a relative high speed. Each time, the control unit knows that a clothing item of one of the eight persons is about to pass-by the sorting-out point AJ, the control unit slows down the carousel and has that clothing item lifted from, drop down, or otherwise released from its hook means onto the respective transfer sliding rod. From there that clothes hanger automatically slides down and lands in the spacing in between that pair of pushing tabs that at that moment passes by at its constant speed. A sensor that is positioned at the transfer point A17 detects this and thus assigns that sorted-out transferred clothing item to that outlet hanger position.

That clothing item the gets transported at said constant speed along the eight diverters 1-8. The control unit already has assigned each accumulator to one of the eight persons for whom the clothing items have been sorted-out from the carousel F, and temporarily opens the corresponding one of the outlet diverters while keeping the other ones closed.

This diverting of the sorted-out clothing items for each of the eight persons goes on until no more clothing items of those eight persons are present on the carousel F and diverting conveyor H. During this, personalized batches of clothing items are accumulated on the upstream buffer segments.

The control unit then opens the stoppers AL, AM, AN, AO, AP, AQ, AR, AS, such that those batches slide onto the downstream buffer segments. From there, the personalized buffered batches of diverted sorted-out clothing items can be transferred by the turn from their accumulator onto the outlet domino track of the outlet conveyor I'. The outlet conveyor I' transports those batches away to an exit J for further handling, packaging and/or transport. During that, the upstream buffer segments are already available again for buffering diverted sorted-out clothing items of a new group of persons onto.

As soon as carousel F has been sorted-out fully empty, the control unit closes the inlet diverter AG and opens the inlet diverter AF, such that from then on carousel F gets loaded and assigned with identified clothing items again, while the buffering-sorting conveyor G then can start sorting-out onto the diverting conveyor H, and so on. If desired the control unit can also firstly keep on loading and assigning the carousel G with identified clothing items, until this carousel G is fully loaded, before it switches to start loading carousel F.

The sorting installation as shown in fig. 1 is destined for sorting-out and diverting small-size batches of personal clothing items. For that purpose the mentioned relative small buffering spaces of 10-15 on the accumulators of the outlet station I already suffices.

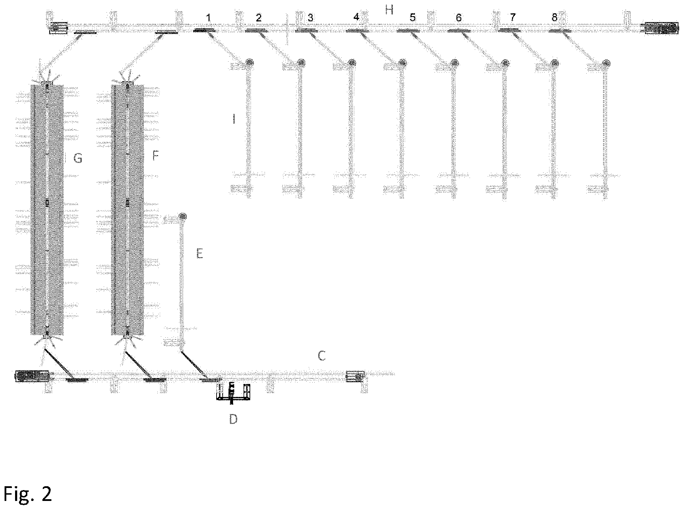

If the sorting installation needs to be able to sort-out and divert large-size batches of clothing items, then the accumulators can be increased in size, do not need intermediate operable stoppers, and for example can be provided with transport worms with larger buffering capacities of between for example 100-500 clothes hangers. This is shown in fig. 2. Such larger volumes may for example occur when dealing with standardized hospital clothing items, that need to be sorted-out/diverted on type, like for example trousers versus jacket, and/or that need to be sorted-out/diverted on size, like for example XS, S, M, L versus XL, and/or that even may comprise a limited number of personal clothing items that need to be sorted-out/diverted on person.

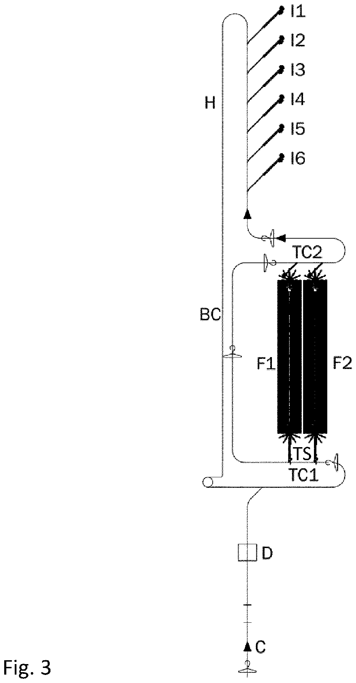

In fig. 3 similar components of the sorting installation have been indicated with similar reference symbols. The inlet station C now connects to a bypass connection BC that comprises an endless conveyor member with a first transfer conveyor section TC1, a second transfer conveyor section TC2, and a diverting conveyor section H.

The first transfer conveyor section TC1 connects to two buffering-sorting conveyors F1, F2 for, after identification at the identifying device D, be able to, firstly feed some of the identified clothes hangers to one of them. Those ones of the identified clothes hangers then firstly get loaded onto one of the buffering-sorting conveyors F1, F2 while having them assigned to individual inlet hanger positions thereof. There they can remain being buffered for as long as desired or necessary, until they are called for by the control unit. For that the buffering-sorting conveyors F1, F2 are positioned to sort-out via the second transfer conveyor section TC2 onto the diverting conveyor section H. Those first buffered ones of the identified clothes hangers then get loaded onto the diverting conveyor section H while having them assigned to individual outlet hanger positions thereof.

The bypass connection BC thus is configured for, after identification at the identifying device D, being able to, if desired, directly feed some of the identified clothes hangers to the diverting conveyor section H without first buffering them in one of the buffering-sorting conveyors F1, F2. Those directly fed ones of the identified clothes hangers then get immediately loaded onto the diverting conveyor section H while having them assigned to the individual outlet hanger positions thereof.

The bypass connection BC is formed by an endless conveyor member, that is guided along an endless track, and that is equipped with spaced apart transportation members that define the individual outlet hanger positions that are configured to have the identified ones of the clothes hangers assigned to.

A plurality of accumulators I1-I6 are placed in parallel of each other alongside the diverting conveyor section H. Operable diverters are positioned between the diverting conveyor section H and the accumulators I1-I6.

The bypass connection BC as shown in the fig. 3 embodiment offers new advantageous methods of handling of the clothing items, of which two examples shall be explained in more detail below.

In the first example, when clothing items arrive at the inlet station C from out of production, like after having been cleaned in a laundromat, they pass by the identifying device D that reads a chip or the like of the clothing item, and inputs the clothing item data into a control unit. The control unit then compares this clothing item data with a pending client's order list of clothing items that at that moment needs to be sorted out for that client.

If the newly arrived and scanned clothing item indeed is on that order list, track switches TS are operated such that it lets that clothing item that moves along the bypass connection BC pass by the buffering-sorting conveyors F and directly move on towards the diverting conveyor section H, while getting assigned to a specific outlet hanger position thereof.

If the newly arrived and scanned clothing item is not on that order list or if a sufficient number of that type of clothing items on the order list has already passed on to the diverting conveyor section H, the track switches TS are operated such that it lets that clothing item move away from the bypass connection BC and first be loaded onto either one of the buffering-sorting conveyors F, while getting assigned to a specific inlet hanger position thereof.

All buffered clothing items in the buffering-sorting conveyors F is kept track off and thus is known by the control unit. If specific types of clothing items still need to be added to a delivery in order to complete a pending client's order list, the control unit can check if those clothing items are present in one of the buffering-sorting conveyors F. If this indeed is the case, then the control unit may order the buffering-sorting conveyors F to sort them out from their assigned individual inlet hanger positions onto the bypass connection BC towards the diverting conveyor section H thereof, while assigning them to the individual outlet hanger positions thereof.

As soon as the delivery according to the order list is completed, then all clothing items that after that arrive from out of production at the inlet station C, are diverted towards the buffering-sorting conveyors F until a new order list gets to be pending and a new sorting cycle starts.

In the second example, delivery order lists for a plurality of clients are sent towards the control unit and are each dedicated to a specific one of the plurality of accumulators of the outlet station I.

All buffered clothing items in the buffering-sorting conveyors F have been kept track off and are known by the control unit. The control unit then may order the buffering-sorting conveyors F, G to sort desired clothing items according to the order lists from their assigned individual inlet hanger positions onto the bypass connection BC towards its diverting conveyor section H, while assigning them to the individual outlet hanger positions thereof, after which those clothing items are diverted towards respective ones of the plurality of accumulators each corresponding to the client delivery order list that has been dedicated thereto.

As soon as the buffering-sorting conveyors F are empty or no longer comprise clothing items belonging to one of the deliveries, newly arriving clothing items are released at the inlet station C for identification at D. If the identified clothing items correspond to ones of still missing items of one of the pending client delivery order lists, then the track switches TS are set to guide those clothing items via the bypass connection BC directly towards the diverting conveyor section H, while assigning them to the individual outlet hanger positions thereof, after which those clothing items are diverted towards respective ones of the plurality of accumulators each corresponding to the client delivery order list that has been dedicated thereto. If the identified clothing items do not correspond to ones of still missing items of one of the pending client delivery order lists, then the track switches TS are set to guide those clothing items towards one of the buffering-sorting conveyor sections F.

As soon as the deliveries according to the order lists are completed, then all clothing items that after that arrive from out of production at the inlet station C are also diverted towards the buffering-sorting conveyors F until a new set of order lists gets to be pending and a new sorting cycle starts.

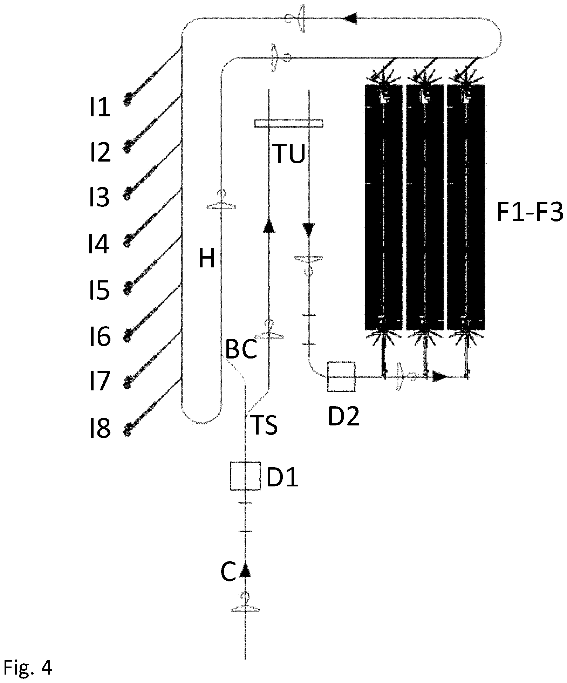

In fig. 4 the sorting installation comprises an inlet station C with a first identifying device D1. An operable track switch TS is provided at the end of the inlet station C to on the one hand connect the inlet station C to a bypass connection BC, and on the other hand connect the inlet station C via a transfer unit TU to three buffering-sorting conveyors F1-F3. A second identifying device D2 is provided just before the buffering-sorting conveyors F1-F3.

The bypass connection BC connects directly to an upstream portion of a diverting conveyor H, whereas the three buffering-sorting conveyors F1-F3 each connect to a downstream portion thereof. The diverting conveyor H has eight accumulators I1-I8 of an outlet station I placed in parallel thereof.

After being identified by the first identifying device D1, applicable ones of the identified clothing hangers can now directly be assigned and loaded to individual outlet hanger positions of the diverting conveyor H while bypassing the buffering-sorting conveyors F1-F3. The not-applicable ones of the identified clothing hangers can then firstly be assigned and loaded to the individual inlet hanger positions of one of the buffering-sorting conveyors F1-F3 to be buffered there.

The bypass connection BC as shown in the fig. 4 embodiment offers new advantageous methods of handling of the clothing items, of which two examples shall be explained in more detail below.

In the first example, when clothing items arrive at the inlet station C from out of production, like after having been cleaned in a laundromat, they pass by the identifying device D that reads a chip or the like of the clothing item, and inputs the clothing item data into a control unit. The control unit then compares this clothing item data with a pending client's order list of clothing items that at that moment needs to be sorted out for that client.

If the newly arrived and scanned clothing item indeed is on that order list, the track switch TS is operated such that it lets that clothing item move along the bypass connection BC and directly be loaded onto the diverting conveyor H, while getting assigned to a specific outlet hanger position thereof.

If the newly arrived and scanned clothing item is not on that order list or if a sufficient number of that type of clothing items on the order list has already been loaded onto the diverting conveyor H, the track switch TS is operated such that it lets that clothing item move away from the bypass connection BC and first be loaded onto either one of the buffering-sorting conveyors F, while getting assigned to a specific inlet hanger position thereof.

All buffered clothing items in the buffering-sorting conveyors F is kept track off and thus is known by the control unit. If specific types of clothing items still need to be added to a delivery in order to complete a pending client's order list, the control unit can check if those clothing items are present in one of the buffering-sorting conveyors F. If this indeed is the case, then the control unit may order the buffering-sorting conveyors F to sort them out from their assigned individual inlet hanger positions onto the diverting conveyor H, while assigning them to the individual outlet hanger positions thereof.

As soon as the delivery according to the order list is completed, then all clothing items that after that arrive from out of production at the inlet station C, are diverted towards the buffering-sorting conveyors F until a new order list gets to be pending and a new sorting cycle starts.

In the second example, delivery order lists for a plurality of clients are sent towards the control unit and are each dedicated to a specific one of the plurality of accumulators of the outlet station I.

All buffered clothing items in the buffering-sorting conveyors F have been kept track off and are known by the control unit. The control unit then may order the buffering-sorting conveyors F, G to sort desired clothing items according to the order lists from their assigned individual inlet hanger positions onto the diverting conveyor H, while assigning them to the individual outlet hanger positions thereof, after which those clothing items are diverted towards respective ones of the plurality of accumulators each corresponding to the client delivery order list that has been dedicated thereto.

As soon as the buffering-sorting conveyors F are empty or no longer comprise clothing items belonging to one of the deliveries, newly arriving clothing items are released at the inlet station C for identification at D. If the identified clothing items correspond to ones of still missing items of one of the pending client delivery order lists, then the track switch TS is set to guide those clothing items via the bypass connection BC directly towards the diverting conveyor H, while assigning them to the individual outlet hanger positions thereof, after which those clothing items are diverted towards respective ones of the plurality of accumulators each corresponding to the client delivery order list that has been dedicated thereto. If the identified clothing items do not correspond to ones of still missing items of one of the pending client delivery order lists, then the track switch TS is set to guide those clothing items towards the buffering-sorting conveyors F.

As soon as the deliveries according to the order lists are completed, then all clothing items that after that arrive from out of production at the inlet station C are also diverted towards the buffering-sorting conveyors F until a new set of order lists gets to be pending and a new sorting cycle starts.

Besides the shown and described embodiments, numerous variants are possible. For example the dimensions and shapes of the various parts can be altered. Also it is possible to make combinations between advantageous aspects of the shown embodiments. Instead of using spreading-type sorting carousels other kinds of conveyors can be used, as long as they are capable of buffering and sorting-out relative large volumes of loaded clothing items. Instead of using a domino-track another kind of diverting conveyor can be used, as long as it is capable of diverting sorted-out clothing items at high speed over a number of accumulators. Instead of inlet sliding rods other types of automated loading units can also be used, like a robot arm. Instead of transfer sliding rods other types of automated transfer units can also be used, like a robot arm. Instead of a towing hook conveyor or other type of conveyor as inlet station, it is also possible to provide for manual inlet station where an operator each time scans a new clothing item in front of an identifying device and then hangs it with its clothes hanger on a specific one of inlet hanger positions of the buffering-sorting conveyor.

It should be understood that various changes and modifications to the presently preferred embodiments can be made without departing from the scope of the invention, and therefore will be apparent to those skilled in the art. It is therefore intended that such changes and modifications be covered by the appended claims.

## Claims

1. Automated clothes sorting installation for sorting clothing items hanging on clothes hangers, comprising:
- an inlet station (C) configured for feeding clothing items hanging on clothes hangers;
- an identifying device (D) configured for identifying respective ones of the clothes hangers or clothing items hanging on them;
- a diverting conveyor (H) configured for transporting the clothes hangers while diverting them, and for that has:
• an endless track;
• an endless conveyor member, that is guided along the track, that is equipped with spaced apart transportation members that are configured to take along respective ones of the clothes hangers; and
• a drive unit for driving the conveyor member,
- an outlet station (I) with a plurality of accumulators that are placed in parallel of each other alongside the diverting conveyor, and that are each configured to temporarily buffer a number of diverted clothes hangers;
- operable diverters (1-8) positioned between the diverting conveyor (H) and the accumulators; and
- a control unit that is configured to operate the diverters to divert identified ones of the clothes hangers towards respective ones of the plurality of accumulators each corresponding to an individual sorting criterium,
**characterized in that,**
the clothes sorting installation further comprising:
- one or more buffering-sorting conveyors (F, G), each configured for transporting the clothes hangers while temporarily buffering and sorting them, and for that each having:
• an endless track;
• an endless conveyor member, that is guided along the track, that is equipped with spaced apart transportation members that are configured to take along respective ones of the clothes hangers; and
• a drive unit for driving the conveyor member,
wherein the identifying device (D) is positioned along the inlet station (C), and the inlet station (C) connects to each buffering-sorting conveyor (F, G) for feeding identified clothes hangers thereto,
wherein each buffering-sorting conveyor (F, G) has its spaced apart transportation members define individual inlet hanger positions that are configured to have the identified clothes hangers assigned to,
wherein the one or more buffering-sorting conveyors (F, G) are positioned to sort-out onto the diverting conveyor (H),
wherein the diverting conveyor (H) has its spaced apart transportation members define individual outlet hanger positions that are configured to have the sorted-out ones of the clothes hangers assigned to, and
wherein the control unit further is configured to:
∘ assign the identified clothes hangers to the individual inlet hanger positions; and
∘ control each buffering-sorting conveyor (F, G) to sort-out respective ones of the identified clothes hangers from their assigned individual inlet hanger positions according to an accumulated set of the individual sorting criteria onto the diverting conveyor (H), while assigning them to the individual outlet hanger positions.

2. Clothes sorting installation according to claim 1, wherein at least two buffering-sorting conveyors (F, G) are provided, that are placed in parallel between the inlet station (C) and the diverting conveyor (H), and that are configured to have one of them buffer fed identified clothes hangers coming from the inlet station (C) while another one of them is sorting-out earlier buffered identified clothes hangers onto the diverting conveyor (H) with the diverting conveyor (H) simultaneously diverting sorted-out clothes hangers onto the accumulators.

3. Clothes sorting installation according to claim 1 or 2, wherein each buffering-sorting conveyor (F, G) is a variable speed type, whereas the diverting conveyor (H) is a constant speed type.

4. Clothes sorting installation according to one of the preceding claims, wherein each buffering-sorting conveyor (F, G) has x defined assignable individual inlet hanger positions, whereas the diverting conveyor (H) has y defined assignable individual outlet hanger positions, wherein x is larger than y, in particular more than the number of the plurality of accumulators times larger.

5. Clothes sorting installation according to one of the preceding claims, wherein the spaced apart transportation members of each buffering-sorting conveyor (F, G) are formed by hanging elements that are configured to hang respective ones of the clothes hangers with a hook portion onto,
wherein the hanging elements define the individual inlet hanger positions.

6. Clothes sorting installation according to claim 5, wherein the endless track of the buffering-sorting conveyor (F, G) is racetrack shaped and comprises pairs of opposing straight and convexly curved track sections,
wherein distances between successive points at which the hanging elements are attached to the endless conveyor member are such that there are always at least three hanging elements in a convexly curved track section,
wherein the hanging elements comprise bearing arms which are attached to the conveyor member and extend sideways outwards from the conveyor member, outer bearing-arm parts being provided with hook means for the clothes hangers to be hung from, so that, during a movement of the conveyor member along the track, the distances between successive hook means each time case increase in the convexly curved track sections and decrease in the straight track sections,
wherein the inlet station connects to a first one of the convexly curved track sections, and wherein a second one of the convexly curved track sections connects to the diverting conveyor.

7. Clothes sorting installation according to one of the preceding claims, wherein the track of the diverting conveyor (H) comprises an upper sliding surface that is configured for the clothes hangers to slide along with a hook portion,
wherein the upper sliding surface delimits an upwardly open longitudinal slot,
wherein the conveyor member is guided slidably along the track underneath the upper sliding surface with the spaced apart transportation members being formed by pushing tabs that project upward from the conveyor member through the slot, and
wherein the pushing tabs define the individual outlet hanger positions in between them, and are configured to push the assigned sorted-out ones of the identified clothes hangers along the track while sliding over the upper sliding surface.

8. Clothes sorting installation according to one of the preceding claims, wherein each accumulator comprises:
- an upstream and a downstream buffer segment with an operable stopper between them; and/or
- wherein each accumulator comprises a sliding rod; and/or
- wherein each accumulator comprises a rotatable worm.

9. Clothes sorting installation according to one of the preceding claims, wherein the outlet station (I) further comprises:
- an outlet conveyor (I') that is configured to transport batches of the diverted sorted-out ones of the identified clothes hangers towards an unloading point, and for that has:
• a track;
• a conveyor member, that is guided along the track, that is equipped with spaced apart transportation members that are configured to take along the clothes hangers; and
• a drive unit for driving the conveyor member,
wherein the diverting conveyor (H) and outlet conveyor (I') are placed in series with each other, with the accumulators provided in parallel between the diverting conveyor (H) and the outlet conveyor (I').

10. Clothes sorting installation according to claim 9, wherein the track of the outlet conveyor (I') comprises an upper sliding surface that is configured for the clothes hangers to slide along with a hook portion,
wherein the upper sliding surface delimits an upwardly open longitudinal slot, wherein the conveyor member is guided slidably along the track underneath the upper sliding surface with the spaced apart transportation members being formed by pushing tabs that project upward from the endless conveyor member through the slot,
wherein the pushing tabs define hanger positions in between them that are configured to have buffered diverted sorted-out batches of the clothes hangers transferred to during transfer from a respective one of the accumulators onto the outlet conveyor, and
wherein the pushing tabs are configured to push the buffered diverted sorted-out batches of the clothes hangers along the track while sliding over the upper sliding surface.

11. Clothes sorting installation according to one of the preceding claims, wherein the inlet station (C) further connects to the diverting conveyor (H) by means of a bypass connection (BC) that is configured to directly assign and load selected ones of the identified clothes hangers to the diverting conveyor (H) while bypassing the one or more buffering-sorting conveyors (F, G).

12. Clothes sorting installation according to claim 11, wherein the control unit further is configured to:
∘ if applicable according to the accumulated set of the individual sorting criteria, directly assign and load the identified clothes hangers to the individual outlet hanger positions while having them bypass the one or more buffering-sorting conveyors (F, G), or
∘ if not applicable according to the accumulated set of the individual sorting criteria, firstly assign, load and buffer the identified clothes hangers to the individual inlet hanger positions of the one or more buffering-sorting conveyors (F, G).

13. Method for operating a clothes sorting installation according to one of the preceding claims, comprising the steps:
- feeding clothing items hanging on clothes hangers via the inlet station (C);
- identifying respective ones of the clothes hangers or clothing items hanging on them with the identifying device (D);
- loading the clothing hangers to the individual inlet hanger positions of the one or more buffering-sorting conveyors (F, G) while assigning the identified clothes hangers thereto;
- sorting-out respective ones of the identified clothes hangers from their assigned individual inlet hanger positions on the one or more buffering-sorting conveyors (F, G) according to an accumulated set of the individual sorting criteria, while assigning them to the individual outlet hanger positions;
- transferring the sorted-out identified ones of the clothing hangers onto the diverting conveyor(H);
- diverting the transferred sorted-out identified ones of the clothes hangers towards respective ones of the plurality of accumulators each corresponding to the individual sorting criteria.

14. Method according to claim 13, further comprising the step:
- directly assigning and loading applicable ones of the identified clothing hangers according to the accumulated set of the individual sorting criteria from the inlet station (C) to the individual outlet hanger positions of the diverting conveyor (H) while bypassing the buffering-sorting conveyors (F, G); and
- firstly assigning and loading not-applicable ones of the identified clothing hangers according to the accumulated set of the individual sorting criteria from the inlet station (C) to the individual inlet hanger positions of the one or more buffering-sorting conveyors (F, G) to be buffered there.

15. Non-volatile storage medium for the control unit of the clothes sorting installation according to one of the preceding claims 1-13, storing a machine readable instruction to perform the method according to claim 14.

## Patentansprüche

1. Automatisierte Kleidungssortieranlage zum Sortieren von auf Kleiderbügeln hängenden Kleidungsstücken, umfassend:
- eine Einlassstation (C), die zum Zuführen von auf Kleiderbügeln hängenden Kleidungsstücken konfiguriert ist;
- eine Identifizierungsvorrichtung (D), die zum Identifizieren jeweiliger Kleiderbügel oder der auf ihnen hängenden Kleidungsstücke konfiguriert ist;
- einen Umlenkförderer (H), der so konfiguriert ist, dass er die Kleiderbügel transportiert, während er sie umlenkt, und der zu diesem Zweck Folgendes aufweist:
• eine Endlosbahn;
• ein Endlosförderelement, das entlang der Bahn geführt wird, das mit beabstandeten Transportelementen ausgestattet ist, die so konfiguriert sind, dass sie jeweils einen der Kleiderbügel mitführen; und
• eine Antriebseinheit zum Antreiben des Förderelements,
- eine Ausgabestation (1) mit einer Vielzahl von Sammlern, die parallel zueinander entlang des Umlenkförderers angeordnet sind und die jeweils so konfiguriert sind, dass sie eine Anzahl von umgeleiteten Kleiderbügeln vorübergehend puffern;
- betätigbare Umlenker (1-8), die zwischen dem Umlenkförderer (H) und den Sammlern angeordnet sind; und
- eine Steuereinheit, die so konfiguriert ist, dass sie die Umlenker betätigt, um identifizierte Kleiderbügel zu jeweiligen der Vielzahl von Akkumulatoren umzulenken, die jeweils einem individuellen Sortierkriterium entsprechen,
**dadurch gekennzeichnet, dass**
die Kleidungssortieranlage ferner umfasst:
- einen oder mehrere Puffer-Sortierförderer (F, G), die jeweils zum Transportieren der Kleiderbügel konfiguriert sind, während sie diese vorübergehend puffern und sortieren, und die zu diesem Zweck jeweils Folgendes aufweisen:
• eine Endlosbahn;
• ein Endlosförderelement, das entlang der Bahn geführt wird und mit beabstandeten Transportelementen ausgestattet ist, die so konfiguriert sind, dass sie jeweils einen der Kleiderbügel mitführen; und
• eine Antriebseinheit zum Antreiben des Förderelements,
wobei die Identifizierungsvorrichtung (D) entlang der Einlassstation (C) positioniert ist und die Einlassstation (C) mit jedem Puffer-Sortierförderer (F, G) verbunden ist, um diesem identifizierte Kleiderbügel zuzuführen,
wobei die beabstandeten Transportelemente jedes Puffer-Sortierförderers (F, G) einzelne Einlassbügelpositionen definieren, die so konfiguriert sind, dass sie den identifizierten Kleiderbügeln zugewiesen werden,
wobei der eine oder die mehreren Puffer-Sortierförderer (F, G) so positioniert sind, dass sie auf den Umlenkförderer (H) aussortieren,
wobei die beabstandeten Transportelemente des Umlenkförderers (H) einzelne Ausgabebügelpositionen definieren, die so konfiguriert sind, dass sie den aussortierten Kleiderbügeln zugewiesen werden, und
wobei die Steuereinheit ferner konfiguriert ist, um:
o die identifizierten Kleiderbügel den einzelnen Einlassbügelpositionen zuzuordnen; und
∘ jeden Puffer-Sortierförderer (F, G) zu steuern, um jeweilige der identifizierten Kleiderbügel von ihren zugewiesenen individuellen Einlassbügelpositionen gemäß einem akkumulierten Satz der individuellen Sortierkriterien auf den Umlenkförderer (H) auszusortieren, während sie den individuellen Ausgabebügelpositionen zugewiesen werden.

2. Kleidungssortieranlage nach Anspruch 1, wobei mindestens zwei Puffer-Sortierförderer (F, G) bereitgestellt sind, die parallel zwischen der Einlassstation (C) und dem Umlenkförderer (H) angeordnet sind und die so konfiguriert sind, dass einer von ihnen zugeführte identifizierte Kleiderbügel, die von der Einlassstation (C) kommen, puffert, während ein anderer von ihnen früher gepufferte identifizierte Kleiderbügel auf den Umlenkförderer (H) aussortiert, wobei der Umlenkförderer (H) gleichzeitig aussortierte Kleiderbügel auf die Sammler umlenkt.

3. Kleidungssortieranlage nach Anspruch 1 oder 2, bei der jeder Puffer-Sortierförderer (F, G) ein Förderer mit variabler Geschwindigkeit ist, während der Umlenkförderer (H) ein Förderer mit konstanter Geschwindigkeit ist.

4. Kleidungssortieranlage nach einem der vorhergehenden Ansprüche, wobei jeder Puffer-Sortierförderer (F, G) x definierte zuweisbare einzelne Einlassbügelpositionen aufweist, während der Umlenkförderer (H) y definierte zuweisbare einzelne Ausgabebügelpositionen aufweist, wobei x größer als y ist, insbesondere mehr als die Anzahl der Vielzahl von Sammlern mal größer.

5. Kleidungssortieranlage nach einem der vorhergehenden Ansprüche, wobei die beabstandeten Transportelemente jedes Puffer-Sortierförderers (F, G) durch Hängeelemente gebildet werden, die zum Aufhängen jeweiliger Kleiderbügel mit einem Hakenabschnitt konfiguriert sind,
wobei die Hängeelemente die einzelnen Einlassbügelpositionen definieren.

6. Kleidungssortieranlage nach Anspruch 5, wobei die Endlosbahn des Puffer-Sortierförderers (F, G) rennbahnförmig ist und Paare von gegenüberliegenden geraden und konvex gekrümmten Bahnabschnitten umfasst,
wobei Abstände zwischen aufeinanderfolgenden Punkten, an denen die Hängeelemente an dem Endlosförderelement befestigt sind, so sind, dass immer mindestens drei Hängeelemente in einem konvex gekrümmten Bahnabschnitt vorhanden sind,
wobei die Hängeelemente Tragarme umfassen, die an dem Förderelement befestigt sind und sich seitlich von dem Förderelement nach außen erstrecken, wobei äußere Tragarmteile mit Hakenmitteln zum Aufhängen der Kleiderbügel versehen sind, so dass während einer Bewegung des Förderelements entlang der Bahn die Abstände zwischen aufeinanderfolgenden Hakenmitteln jedes Mal in den konvex gekrümmten Bahnabschnitten zunehmen und in den geraden Bahnabschnitten abnehmen,
wobei die Einlassstation mit einem ersten der konvex gekrümmten Bahnabschnitte verbunden ist und wobei ein zweiter der konvex gekrümmten Bahnabschnitte mit dem Umlenkförderer verbunden ist.

7. Kleidungssortieranlage nach einem der vorhergehenden Ansprüche, wobei die Bahn des Umlenkförderers (H) eine obere Gleitfläche aufweist, die so konfiguriert ist, dass die Kleiderbügel mit einem Hakenabschnitt entlanggleiten können,
wobei die obere Gleitfläche einen nach oben offenen Längsschlitz abgrenzt,
wobei das Förderelement gleitend entlang der Bahn unterhalb der oberen Gleitfläche geführt wird, wobei die beabstandeten Transportelemente durch Schieberücken gebildet werden, die von dem Förderelement durch den Schlitz nach oben ragen, und
wobei die Schieber die einzelnen Ausgabebügelpositionen zwischen ihnen definieren und so konfiguriert sind, dass sie die zugewiesenen, aussortierten der identifizierten Kleiderbügel entlang der Bahn schieben, während sie über die obere Gleitfläche gleiten.

8. Kleidungssortieranlage nach einem der vorhergehenden Ansprüche, **dadurch gekennzeichnet, dass** jeder Sammler umfasst:
- ein vorgelagertes und ein nachgelagertes Puffersegment mit einem bedienbaren Stopper dazwischen; und/oder
- wobei jeder Sammler eine Gleitstange umfasst; und/oder
- wobei jeder Sammler eine drehbare Schnecke umfasst.

9. Kleidungssortieranlage nach einem der vorhergehenden Ansprüche, wobei die Ausgabestation (1) ferner umfasst:
- einen Ausgabeförderer (I'), der so konfiguriert ist, dass er Stapel der umgelenkten, aussortierten, identifizierten Kleiderbügel zu einem Entladepunkt transportiert, und der zu diesem Zweck Folgendes aufweist:
• eine Bahn;
• ein Förderelement, das entlang der Bahn geführt wird und das mit beabstandeten Transportelementen ausgestattet ist, die so konfiguriert sind, dass sie die Kleiderbügel mitführen; und
• eine Antriebseinheit zum Antreiben des Förderelements,
wobei der Umlenkförderer (H) und der Ausgabeförderer (I') in Reihe zueinander angeordnet sind, wobei die Sammler parallel zwischen dem Umlenkförderer (H) und dem Ausgabeförderer (I') bereitgestellt sind.

10. Kleidungssortieranlage nach Anspruch 9, wobei die Bahn des Ausgabeförderers (I') eine obere Gleitfläche umfasst, die so konfiguriert ist, dass die Kleiderbügel mit einem Hakenabschnitt entlanggleiten können,
wobei die obere Gleitfläche einen nach oben offenen Längsschlitz abgrenzt,
wobei das Förderelement gleitend entlang der Bahn unterhalb der oberen Gleitfläche geführt wird, wobei die beabstandeten Transportelemente durch Schieber gebildet werden, die von dem Endlosförderelement durch den Schlitz nach oben ragen,
wobei die Schieber zwischen sich Kleiderbügelpositionen definieren, die so konfiguriert sind, dass gepufferte, umgelenkte, aussortierte Chargen der Kleiderbügel während des Transfers von einem jeweiligen der Sammler auf den Ausgabeförderer auf sie übergeben werden, und
wobei die Schieber so konfiguriert sind, dass sie die gepufferten, umgelenkten, aussortierten Chargen der Kleiderbügel entlang der Bahn schieben, während sie über die obere Gleitfläche gleiten.

11. Kleidungssortieranlage nach einem der vorhergehenden Ansprüche, wobei die Einlassstation (C) ferner mit dem Umlenkförderer (H) über eine Umgehungsverbindung (BC) verbunden ist, die so konfiguriert ist, dass sie ausgewählte der identifizierten Kleiderbügel unter Umgehung des einen oder der mehreren Puffer-Sortierförderer (F, G) direkt dem Umlenkförderer (H) zuweist und auf diesen lädt.

12. Kleidungssortieranlage nach Anspruch 11, wobei die Steuereinheit ferner so konfiguriert ist, dass sie:
o falls gemäß dem akkumulierten Satz der individuellen Sortierkriterien zutreffend, die identifizierten Kleiderbügel direkt den individuellen Ausgabebügelpositionen zuweist und auf diese lädt, wobei sie die einen oder die mehreren Puffer-Sortierförderer (F, G) umgehen, oder
∘ falls gemäß dem akkumulierten Satz der individuellen Sortierkriterien nicht zutreffend, die identifizierten Kleiderbügel zunächst den individuellen Einlassbügelpositionen des einen oder der mehreren Puffer-Sortierförderer (F, G) zuweist, lädt und puffert.

13. Verfahren zum Betreiben einer Kleidungssortieranlage nach einem der vorhergehenden Ansprüche, umfassend die Schritte:
- Zuführen von auf Kleiderbügeln hängenden Kleidungsstücken über die Einlassstation (C);
- Identifizieren jeweiliger Kleiderbügel oder darauf hängender Kleidungsstücke mit der Identifizierungsvorrichtung (D);
- Laden der Kleiderbügel auf die einzelnen Einlassbügelpositionen des einen oder der mehreren Puffer-Sortierförderer (F, G), wobei die identifizierten Kleiderbügel diesen zugewiesen werden;
- Aussortieren jeweiliger identifizierter Kleiderbügel aus den ihnen zugewiesenen individuellen Einlassbügelpositionen auf dem einen oder den mehreren Puffer-Sortierförderern (F, G) gemäß einem akkumulierten Satz individueller Sortierkriterien, während sie den individuellen Ausgabebügelpositionen zugewiesen werden;
- Übergeben der aussortierten identifizierten Kleiderbügel an den Umlenkförderer (H);
- Umleiten der übergebenen, aussortierten, identifizierten Kleiderbügel zu jeweiligen Sammlern der Vielzahl von Sammlern, die jeweils den individuellen Sortierkriterien entsprechen.

14. Verfahren nach Anspruch 13, ferner umfassend den Schritt:
- direktes Zuweisen und Laden zutreffender der identifizierten Kleiderbügel entsprechend dem akkumulierten Satz der individuellen Sortierkriterien von der Einlassstation (C) auf die einzelnen Ausgabebügelpositionen des Umlenkförderers (H) unter Umgehung der Puffer-Sortierförderer (F, G); und
- zunächst Zuweisen und Laden nicht zutreffender der identifizierten Kleiderbügel gemäß dem akkumulierten Satz der individuellen Sortierkriterien von der Einlassstation (C) zu den individuellen Einlassbügelpositionen des einen oder der mehreren Puffer-Sortierförderer (F, G), um dort gepuffert zu werden.

15. Nichtflüchtiges Speichermedium für die Steuereinheit der Kleidungssortieranlage nach einem der vorhergehenden Ansprüche 1 bis 13, das eine maschinenlesbare Anweisung zur Durchführung des Verfahrens nach Anspruch 14 enthält.

## Revendications

1. Installation de tri automatique de vêtements pour trier des articles vestimentaires suspendus à des cintres, comprenant :
- une station d'entrée (C) configurée pour alimenter des articles vestimentaires sur des cintres ;
- un dispositif d'identification (D) configuré pour identifier des cintres respectifs des cintres ou des articles vestimentaires suspendus dessus ;
- un transporteur de déviation (H) configuré pour transporter les cintres tout en les déviant, et qui pour cela a :
• une piste sans fin ;
• un élément transporteur sans fin, qui est guidé le long de la piste, qui est équipé d'éléments de transport espacés qui sont configurés pour emmener des cintres respectifs des cintres ; et
• une unité d'entraînement pour entraîner l'élément transporteur,
- une station de sortie (I) avec une pluralité d'accumulateurs qui sont placés en parallèle les uns aux autres le long du transporteur de déviation, et qui sont chacun configurés pour mettre en tampon temporairement un nombre de cintres déviés ;
- des dispositifs de déviation opérationnels (1-8) positionnés entre le transporteur de déviation (H) et les accumulateurs ; et
- une unité de commande qui est configurée pour actionner les dispositifs de déviation pour dévier des cintres identifiés des cintres vers des accumulateurs respectifs de la pluralité d'accumulateurs correspondant chacun à un critère de tri individuel,
**caractérisée en ce que**
l'installation de tri de vêtements comprend en outre :
- un ou plusieurs transporteurs de tampon-tri (F, G), chacun configuré pour transporter les cintres tout en les triant et en les mettant en tampon temporairement, et pour cela ayant chacun :
• une piste sans fin ;
• un élément transporteur sans fin, qui est guidé le long de la piste, qui est équipé d'éléments de transport espacés qui sont configurés pour emmener des cintres respectifs des cintres ; et
• une unité d'entraînement pour entraîner l'élément transporteur,
dans laquelle le dispositif d'identification (D) est positionné le long de la station d'entrée (C), et la station d'entrée (C) se connecte à chaque transporteur de tampon-tri (F, G) pour alimenter des cintres identifiés sur celui-ci,
dans laquelle les éléments de transport espacés de chaque transporteur de tampon-tri (F, G) définissent des positions de cintre d'entrée individuelles qui sont configurées pour que les cintres identifiés leur soient attribués,
dans laquelle les un ou plusieurs transporteurs de tampon-tri (F, G) sont positionnés pour effectuer un tri sur le transporteur de déviation (H),
dans laquelle les éléments de transport espacés du transporteur de déviation (H) définissent des positions de cintre de sortie individuelles qui sont configurées pour que les cintres triés des cintres leur soient attribués, et
dans laquelle l'unité de commande est en outre configurée pour :
∘ attribuer les cintres identifiés aux positions de cintre d'entrée individuelles ; et
∘ commander chaque transporteur de tampon-tri (F, G) pour trier des cintres respectifs des cintres identifiés à partir de leurs positions de cintre d'entrée individuelles attribuées en fonction d'un ensemble accumulé des critères de tri individuels sur le transporteur de déviation (H), tout en les attribuant aux positions de cintre de sortie individuelles.

2. Installation de tri de vêtements selon la revendication 1, dans laquelle au moins deux transporteurs de tampon-tri (F, G) sont fournis, qui sont placés en parallèle entre la station d'entrée (C) et le transporteur de déviation (H), et qui sont configurés pour que l'un d'entre eux mette en tampon des cintres identifiés provenant de la station d'entrée (C) tandis qu'un autre d'entre eux trie des cintres identifiés mis en tampon précédemment sur le transporteur de déviation (H) avec le transporteur de déviation (H) déviant simultanément des cintres triés sur les accumulateurs.

3. Installation de tri de vêtements selon la revendication 1 ou 2, dans laquelle chaque transporteur de tampon-tri (F, G) est de type à vitesse variable, tandis que le transporteur de déviation (H) est de type à vitesse constante.

4. Installation de tri de vêtements selon l'une des revendications précédentes, dans laquelle chaque transporteur de tampon-tri (F, G) a x positions de cintre d'entrée individuelles attribuables définies, tandis que le transporteur de déviation (H) a y positions de cintre de sortie individuelles attribuables définies, dans laquelle x est plus grand que y, en particulier plus que le nombre de la pluralité d'accumulateurs fois plus grand.

5. Installation de tri de vêtements selon l'une des revendications précédentes, dans laquelle les éléments de transport espacés de chaque transporteur de tampon-tri (F, G) sont formés par des éléments de suspension qui sont configurés pour suspendre des cintres respectifs des cintres avec une partie de crochet dessus,
dans laquelle les éléments de suspension définissent les positions de cintre d'entrée individuelles.

6. Installation de tri de vêtements selon la revendication 5, dans laquelle la piste sans fin du transporteur de tampon-tri (F, G) est en forme de piste de course et comprend des paires de sections de piste droites et incurvée de manière convexe opposées,
dans laquelle des distances entre des points successifs au niveau desquels les éléments de suspension sont fixés à l'élément transporteur sans fin sont telles qu'il y a toujours au moins trois éléments de suspension dans une section de piste incurvée de manière convexe,
dans laquelle les éléments de suspension comprennent des bras de support qui sont fixés à l'élément transporteur et s'étendent de manière latérale vers l'extérieur à partir de l'élément transporteur, des parties de bras de support externes étant pourvues de moyens de crochet pour suspendre les cintres, de sorte que, pendant un mouvement de l'élément transporteur le long de la piste, les distances entre des moyens de crochet successifs augmentent chaque fois dans les sections de piste incurvées de manière convexe et diminuent dans les sections de piste droites,
dans laquelle la station d'entrée se connecte à une première des sections de piste incurvées de manière convexe, et dans laquelle une seconde des sections de piste incurvées de manière convexe se connecte au transporteur de déviation.

7. Installation de tri de vêtements selon l'une des revendications précédentes, dans laquelle la piste du transporteur de déviation (H) comprend une surface coulissante supérieure qui est configurée pour que les cintres coulissent conjointement avec une partie de crochet,
dans laquelle la surface coulissante supérieure délimite une fente longitudinale ouverte vers le haut,
dans laquelle l'élément transporteur est guidé de manière coulissante le long de la piste sous la surface coulissante supérieure avec les éléments de transport espacés étant formés par des languettes de poussée qui font saillie vers le haut à partir de l'élément transporteur à travers la fente, et
dans laquelle les languettes de poussée définissent les positions de cintre de sortie individuelles entre elles, et sont configurées pour pousser les cintres triés attribués des cintres identifiés le long de la piste tout en coulissant sur la surface coulissante supérieure.

8. Installation de tri de vêtements selon l'une des revendications précédentes, dans laquelle chaque accumulateur comprend :
- un segment tampon en amont et un segment tampon en aval avec une butée opérationnelle entre eux ; et/ou
- dans laquelle chaque accumulateur comprend une tige coulissante ; et/ou
- dans laquelle chaque accumulateur comprend une vis sans fin rotative.

9. Installation de tri de vêtements selon l'une des revendications précédentes, dans laquelle la station de sortie (I) comprend en outre :
- un transporteur de sortie (I') qui est configuré pour transporter des lots des cintres déviés des cintres identifiés vers un point de déchargement, et qui pour cela a :
• une piste ;
• un élément transporteur, qui est guidé le long de la piste, qui est équipé d'éléments de transport espacés qui sont configurés pour emmener les cintres ; et
• une unité d'entraînement pour entraîner l'élément transporteur,
dans laquelle le transporteur de déviation (H) et le transporteur de sortie (I') sont placés en série l'un avec l'autre, les accumulateurs étant fournis en parallèle entre le transporteur de déviation (H) et le transporteur de sortie (I').

10. Installation de tri de vêtements selon la revendication 9, dans laquelle la piste du transporteur de sortie (I') comprend une surface coulissante supérieure qui est configurée pour que les cintres coulissent conjointement avec une partie de crochet,
dans laquelle la surface coulissante supérieure délimite une fente longitudinale ouverte vers le haut,
dans laquelle l'élément transporteur est guidé de manière coulissante le long de la piste sous la surface coulissante supérieure avec les éléments de transport espacés étant formés par des languettes de poussée qui font saillie vers le haut à partir de l'élément transporteur sans fin à travers la fente,
dans laquelle les languettes de poussée définissent des positions de cintre entre elles qui sont configurées pour avoir des lots triés déviés mis en tampon des cintres transférés vers elles pendant le transfert d'un accumulateur respectif des accumulateurs sur le transporteur de sortie, et
dans laquelle les languettes de poussée sont configurées pour pousser les lots triés déviés mis en tampon des cintres le long de la piste tout en coulissant sur la surface coulissante supérieure.

11. Installation de tri de vêtements selon l'une des revendications précédentes, dans laquelle la station d'entrée (C) se connecte en outre au transporteur de déviation (H) au moyen d'une connexion de contournement (BC) qui est configurée pour attribuer et charger directement des cintres sélectionnés des cintres identifiés sur le transporteur de déviation (H) tout en contournant les un ou plusieurs transporteurs de tampon-tri (F, G).

12. Installation de tri de vêtements selon la revendication 11, dans laquelle l'unité de commande est en outre configurée pour :
∘ si applicable en fonction de l'ensemble accumulé des critères de tri individuels, attribuer et charger directement les cintres identifiés sur les positions de cintre de sortie individuelles tout en les faisant contourner les un ou plusieurs transporteurs de tampon-tri (F, G), ou
∘ si non applicable en fonction de l'ensemble accumulé des critères de tri individuels, attribuer, charger et mettre en tampon d'abord les cintres identifiés sur les positions de cintre d'entrée individuelles des un ou plusieurs transporteurs de tampon-tri (F, G).

13. Procédé de fonctionnement d'une installation de tri de vêtements selon l'une des revendications précédentes, comprenant les étapes suivantes :
- l'alimentation d'articles vestimentaires suspendus à des cintres par l'intermédiaire de la station d'entrée (C) ;
- l'identification de cintres respectifs des cintres ou d'articles vestimentaires suspendus dessus avec le dispositif d'identification (D) ;
- le chargement des cintres sur les positions de cintre d'entrée individuelles des un ou plusieurs transporteurs de tampon-tri (F, G) tout en attribuant les cintres identifiés à ceux-ci ;
- le tri des cintres respectifs des cintres identifiés à partir de leurs positions de cintre d'entrée individuelles attribuées sur les un ou plusieurs transporteurs de tampon-tri (F, G) en fonction d'un ensemble accumulé des critères de tri individuels, tout en les attribuant aux positions de cintre de sortie individuelles ;
- le transfert des cintres identifiés triés des cintres sur le transporteur de déviation (H) ;
- la déviation des cintres identifiés triés transférés des cintres vers des accumulateurs respectifs de la pluralité d'accumulateurs correspondant chacun aux critères de tri individuels.

14. Procédé selon la revendication 13, comprenant en outre l'étape suivante :
- l'attribution et le chargement direct de cintres applicables des cintres identifiés en fonction de l'ensemble accumulé des critères de tri individuels provenant de la station d'entrée (C) aux positions de cintre de sortie individuelles du transporteur de déviation (H) tout en contournant les transporteurs de tampon-tri (F, G) ; et
- l'attribution et le chargement d'abord de cintres non applicables des cintres identifiés en fonction de l'ensemble accumulé des critères de tri individuels provenant de la station d'entrée (C) aux positions de cintre d'entrée individuelles des un ou plusieurs transporteurs de tampon-tri (F, G) à y mettre en tampon.

15. Support de stockage non volatil pour l'unité de commande de l'installation de tri de vêtements selon l'une des revendications précédentes 1 à 13, stockant une instruction lisible par machine pour mettre en oeuvre le procédé selon la revendication 14.
